# EUROPÄISCHE PATENTSCHRIFT

(11) **EP 1 858 810 B1**
(45) Veröffentlichungstag und Bekanntmachung des Hinweises auf die Patenterteilung: **01.05.2013**
(21) Anmeldenummer: 06722491.5
(22) Anmeldetag: 16.02.2006
(51) Int. Cl.: C02F 1/461, C02F 1/467

(54) **VORRICHTUNG UND VERFAHREN ZUR ELEKTROLYTISCHEN BEHANDLUNG VON WASSER BEZIEHUNGSWEISE WÄSSRIGEN LÖSUNGEN**
DEVICE AND METHOD FOR THE ELECTROLYTIC TREATMENT OF WATER AND AQUEOUS SOLUTIONS
DISPOSITIF ET PROCEDE DE TRAITEMENT ELECTROLYTIQUE D'EAU OU DE SOLUTIONS AQUEUSES

(30) Priorität: 08.03.2005 DE 202005003691 U
(43) Veröffentlichungstag der Anmeldung: 28.11.2007
(73) Patentinhaber: Judo Wasseraufbereitung GmbH, D-71364 Winnenden (DE)
(72) Erfinder: SÖCKNICK, Ralf, 70806 Kornwestheim (DE); NEIDHARDT, Klaus, 75228 Ispringen (DE); HAUG, Alexander, 71686 Remseck (DE)
(74) Vertreter: Kohler Schmid Möbus
(86) Internationale Anmeldenummer: PCT/DE2006/000278
(87) Internationale Veröffentlichungsnummer: WO 2006/094472

(56) Entgegenhaltungen:
- EP-A- 1 002 765
- DE-A1- 3 203 090
- RU-C1- 2 082 677
- US-B1- 6 235 189
- PATENT ABSTRACTS OF JAPAN Bd. 2000, Nr. 06, 22. September 2000 (2000-09-22) -& JP 2000 087275 A (TOTO LTD), 28. März 2000 (2000-03-28)

## Beschreibung

Die Erfindung betrifft eine Vorrichtung zur elektrolytischen Behandlung von Wasser beziehungsweise wässrigen Lösungen mit einem Zulauf für die zu behandelnde Flüssigkeit und einem Auslass für die behandelte Flüssigkeit sowie mit einer Elektrolyseeinrichtung, die zwischen dem Zulauf und dem Auslass angeordnete Elektroden aufweist, welche auf gegeneinander unterschiedliche elektrische Potentiale gelegt werden können, wobei die Potentialdifferenz mindestens so groß gewählt ist, dass eine Elektrolyse von Wasser und/oder von im Wasser enthaltenen Chlorid-Ionen erfolgen kann, wobei die Elektroden mindestens eine Anode und eine Kathode umfassen, und wobei ein erster Anodenbereich, der aus einem oxidationsstabilen Material gefertigt ist, und ein weiterer Anodenbereich, der zumindest teilweise aus einem Kohlenstoffmaterial gefertigt ist, vorgesehen sind.

Eine solche Vorrichtung ist aus der JP 2000 087275 bekannt.

Die DE 198 59 814 A1 beschreibt ebenfalls eine elektrolytische Behandlung des Wassers in einer Elektrolysezelle. Hier werden desinfizierend wirkende Spezies wie Chlor, unterchlorige Säure oder Sauerstoff aus Wasser selbst und natürlichen Wasserinhaltsstoffen wie Chlorid-Ionen anodisch erzeugt. Als Material für die Elektroden wird mit Edelmetall-Mischoxiden beschichtetes Titan verwendet. Derartige Elektroden sind gegenüber den elektrolytisch erzeugten Desinfizienzien chemisch inert. Nachteilig hieran ist der hohe Preis solcher Elektroden, die deshalb naturgemäß nur eine kleine Oberfläche besitzen. Sie sind daher zwar zur Desinfektion, nicht aber zur Verhinderung der Steinbildung durch elektrolytische Behandlung von wässrigen Lösungen effizient einsetzbar.

Die DE 100 30 340 C2 und EP 1 036 769 B1 beschreiben Vorrichtungen zur Verhinderung von Steinbildung durch elektrolytische Behandlung von wässrigen Lösungen. Beide Vorrichtungen umfassen als Anode eine Schüttung aus Kohlenstoffpartikeln, in die eine Stromzuführung hineinragt. Solche Anoden haben sich hervorragend in Geräten zur Verhinderung von unerwünschten Kalkausfällungen durch elektrolytische Behandlung von Wasser beziehungsweise wässrigen Lösungen bewährt. Sie besitzen eine große Oberfläche und sind in beliebigen Formen einfach und kostengünstig herstellbar. Jedoch können derartige Anoden nicht zur elektrolytischen Erzeugung von desinfizierend wirkenden Spezies wie Chlor, unterchlorige Säure oder Sauerstoff verwendet werden, weil die desinfizierend wirkenden Stoffe an der Oberfläche der Kohlenstoffpartikel, insbesondere an Aktivkohlepartikeln, adsorbiert werden oder aber mit den Kohlenstoffpartikeln chemisch abreagieren und diese dabei oxidieren, so dass die messbare Konzentration an freiem Desinfektionsmittel im behandelten Wasser verschwindend gering ist.

Aus der der EP 0 175 123 B1 ist eine Vorrichtung und ein Verfahren zur Entkeimung und gleichzeitigen Entkalkung von Flüssigkeiten mit einer elektrolytischen Zelle, die über eine Steuerelektronik mit der notwendigen Spannung versorgt wird, bekannt. Beide Elektroden der elektrolytischen Zelle bestehen aus dem gleichen, gegen Chlor beständigen Material. Die Keime, die in der durch die elektrolytische Zelle durchlaufenden Flüssigkeit enthalten sind, werden durch elektrolytische Dissoziation abgetötet. Gleichzeitig läuft im Katholytraum eine Härtereduzierung in Form einer Kathodenabscheidung statt, bei dem Kalziumkarbonat ausfällt. Um die Kalziumkarbonatablagerung an der Kathode in Lösung zu überführen, ist eine Fluss- und Polaritätsänderung an der elektrolytischen Zelle notwendig. Bei sehr hartem Wasser muss dieses Umschalten sehr häufig durchgeführt werden. Derartige Umpolungen sind besonders nachteilig, weil einerseits Kalkablagerungen hierdurch nur unvollständig entfernt werden können und andererseits die Standzeiten der Elektroden erheblich verkürzt werden.

JP 2000 087275 beschreibt eine Elektrolysezelle zur Erzeugung von Kohlensäure. Die aus Dokument 1 bekannte Elektrolysezelle weist eine Anode auf, welche einen ersten Anodenbereich aus einem oxidati-onsstabilen Material und einen weiteren Anodenbereich aus Kohlenstoffmaterial umfasst. Beide Bereiche werden gleichzeitig parallel durchströmt

Aufgabe der vorliegenden Erfindung ist demgegenüber, oben genannte Nachteile zu vermeiden und ein Verfahren und eine Vorrichtung der eingangs genannten Art vorzustellen, mit denen Wasser derart elektrolytisch behandelt wird, dass einerseits unerwünschte Kalkausfällungen in einer effizienteren Art und Weise verhindert werden, andererseits das zu behandelnde Wasser desinfiziert, und gleichzeitig die Standzeit der Elektroden gegenüber dem Stand der Technik verlängert wird.

Diese Aufgabe wird erfindungsgemäß auf überraschend einfache, aber wirkungsvolle Weise dadurch gelöst, dass der erste und der weitere Anodenbereich elektrisch voneinander isoliert angeordnet sind.

Am ersten Anodenbereich, der aus einem oxidationsstabilem Material besteht, werden die Desinfektionsmittel elektrolytisch erzeugt. Das Anodenmaterial des ersten Anodenbereichs ist hierbei nicht nur einem sauren Medium, sondern insbesondere auch den elektrolytisch erzeugten Desinfizienzien ausgesetzt, die starke Oxidationsmittel darstellen. Eine chemische Reaktion der elektrolytisch erzeugten Desinfektionsmittel mit dem Anodenwerkstoff ist unerwünscht. Es ist daher wichtig, dass der Werkstoff des ersten Anodenbereichs oxidationsbeständig ist. Da der aus einem oxidationsstabilem Material bestehende erste Anodenbereich lediglich zur Desinfektion der zu behandelnden Flüssigkeit dient, kann die Oberfläche und somit die Kosten hierfür klein gehalten werden.

Im Gegensatz zum Stand der Technik findet eine Verhinderung einer Kalkausfällung der zu behandelnden Flüssigkeit im Bereich zwischen der Kathode und dem zumindest teilweise aus einem Kohlenstoffmaterial gefertigten weiteren Anodebereich statt. Hier bilden sich Impfkristalle zur Stabilisierung von in Wasser gelöstem Kalk. Da die Kalkschutzfunktion des Wassers hauptsächlich über die Stabilisierung des gelösten Kalks mittels dieser Impfkristalle erfolgt, spielt der in der EP 0 175 123 B1 beschriebene Entkalkungsmechanismus durch die Kalkablagerung an der Kathode nur eine untergeordnete Rolle, d.h. der größte Teil des in der zu behandelnden Flüssigkeit gelösten Kalks wird durch die Impfkristalle stabilisiert, wodurch eine gegenüber der bekannten Vorrichtung geringere Kalkablagerung an der Kathode stattfindet. Ein Ablösen des Kalks von der Kathode, beispielsweise durch eine Polaritätsänderung an der elektrolytischen Zelle, ist daher weniger oft notwendig als im Stand der Technik, wodurch die Standzeit der Elektroden erhöht wird.

Durch die isolierte Anordnung der beiden Anodenbereiche ist es einerseits möglich, die elektrolytische Behandlung zur Desinfektion und zur Verhinderung von unerwünschten Kalkausfällungen räumlich zu trennen. Zum anderen können die mindestens zwei voneinander isolierten Anoden getrennt voneinander angesteuert werden. Dies ist besonders vorteilhaft, weil die Desinfektion und die Verhinderung von unerwünschten Kalkausfällungen in der Regel unterschiedliche Behandlungszeiten und Intensitäten verlangen. So darf die Konzentration an elektrolytisch erzeugtem freien Chlor im behandelten Wasser den Grenzwert der Trinkwasserverordnung von 0,3 mg/l nicht überschreiten, während die Wirksamkeit der Elektrolyseeinrichtung zur Verhinderung von Steinbildung nach dem DVGW-Arbeitsblatt W 512 mindestens 80% betragen muss. Um dies zu realisieren, können die voneinander isolierten Anoden auf unterschiedlichen Potentialen gehalten werden, oder aber es kann mit Hilfe der elektronischen Steuerungseinrichtung zu unterschiedlichen Zeiten ein Potential an die voneinander isolierten Anoden gelegt werden.

Die erfindungsgemäße Vorrichtung ermöglicht daher eine effiziente und kostengünstige Behandlung von Wasser oder von wässrigen Lösungen gegen Kalkablagerungen und gleichzeitig eine Desinfektion der zu behandelnden Flüssigkeit. Dies ist insbesondere im Warmwasserbereich von großem Vorteil, weil hier einerseits durch Verschiebung des Kalk-Kohlensäure-Gleichgewichts die Neigung zur Steinbildung besonders groß ist und andererseits viele Bakterien, wie zum Beispiel Legionellen, sich besonders gut im Warmwasserbereich vermehren können.

Bei einer vorteilhaften Ausgestaltung der Erfindung enthält das Kohlenstoffmaterial des weiteren Anodenbereichs Aktivkohle, Graphit, Kohlenstofffilz, Graphitfilz und/oder eine Schüttung aus Kohlenstoffpartikeln. Aktivkohle eignet sich aufgrund seiner großen Oberfläche besonders gut zu diesem Zweck und adsorbiert darüber hinaus im Wasser eventuell vorhandene Verunreinigungen. Graphit zeichnet sich durch seine gute Leitfähigkeit aus. Schließlich verfügen auch Kohlenstoff- und Graphitfilz über große Oberflächen, sind leicht handhabbar und gut formbar. Darüber hinaus können Elektroden aus einer Schüttung aus Kohlenstoffpartikeln nahezu jede beliebige Form annehmen und der jeweils vorgegebenen Geometrie angepasst werden. Durch ihre enorme Oberfläche zeichnen sie sich durch einen geringen Widerstand und damit durch einen hohen Wirkungsgrad bei der Verhinderung von unerwünschten Kalkausfällungen aus.

Eine weitere Ausführungsform der Erfindung sieht vor, dass in das Kohlenstoffmaterial mindestens eine Stromzuführung hineinragt.

Elektrolyseeinrichtungen mit einem Anodenbereich aus Kohlenstoff- oder Graphitfilz, in dem eine Stromzuführung hineinragt, haben beim Wirkungsnachweis nach DVGW-Arbeitsblatt W 512, Verfahren zur Beurteilung der Wirksamkeit von Wasserbehandlungsanlagen zur Verminderung von Steinbildung, besonders gute Ergebnisse erzielt.

Die Stromzuführung ist vorzugsweise aus einem elektrisch leitenden Material, vorzugsweise aus Graphit, Edelmetall oder mit Edelmetall oder Mischoxiden beschichtetem Titan, gefertigt. Graphitelektroden sind in vielen Varianten kostengünstig erhältlich. Vorteilhaft an Edelmetallelektroden und Elektroden aus mit Edelmetall oder Mischoxiden beschichtetem Titan ist ihre hohe Oxidationsbeständigkeit.

Bei einer besonders vorteilhaften Ausführungsform der Erfindung enthält das oxidationsstabile Material des ersten Anodenbereichs Edelmetall oder mit Edelmetall oder Mischoxiden beschichtetes Titan. Diese Werkstoffe sind gerade im anodischen Bereich, wo eine hohe chemische und elektrochemische Beständigkeit verlangt wird, hervorragend geeignet. Titan als Basismetall kann in Form eines Drahtes oder als Streckmetall ausgebildet sein. Es ist leicht formbar und kann daher einfach an die vorliegende Geometrie angepasst werden.

Zur Ansteuerung der Elektroden kann eine elektronische Steuereinrichtung vorgesehen sein.

Bei einer weiteren vorteilhaften Ausführungsform der Erfindung ist eine Messzelle zur Ermittlung des Gehalts an freiem Chlor in der behandelten Flüssigkeit vorgesehen. Damit ist sichergestellt, dass der Grenzwert der Trinkwasserverordnung von 0,3 mg/l nicht überschritten wird. Gleichzeitig kann kontrolliert werden, ob eine Mindestkonzentration an freiem Chlor nicht unterschritten wird, um eine ausreichende Desinfektion des zu behandelnden Wassers zu gewährleisten. Der gemessene Wert der Konzentration des freien Chlors kann darüber hinaus zur Steuerung der Intensität der elektrolytischen Behandlung verwendet werden.

Besonders vorteilhaft ist auch eine Ausführungsform der Erfindung, bei der eine Dosiereinrichtung zur Regelung des Chloridgehaltes vorgesehen ist. Dadurch kann beispielsweise die Chloridkonzentration in Flüssigkeiten mit geringem natürlichem Chloridgehalt erhöht werden, so dass auch in diesen Fällen chlorhaltige Desinfizienzien in ausreichender Konzentration elektrolytisch erzeugt werden können.

Besonders bevorzugt ist schließlich eine Ausführungsform, bei der die Kathode bürstenförmig, insbesondere mit sternförmig radial abstehenden Borsten, ausgebildet ist. Eine solche Kathode ist ausführlich in DE 198 52 956 C1 beschrieben.

Darüber hinaus ist es von Vorteil, wenn Mittel zur Befreiung der Kathode von Kalkablagerungen während des Betriebs der Vorrichtung vorgesehen sind. Kalkablagerungen entstehen durch die Anhebung des pH-Wertes im Kathodenbereich und sollten regelmäßig entfernt werden, um eine Verblockung und Isolierung der Kathodenoberfläche zu verhindern. Hierzu kann beispielsweise ein mechanischer Abstreifer dienen, der über die Spitzen der Borsten einer bürstenförmigen Kathode streift und dabei durch ein entsprechendes Tordieren oder Verbiegen der Kathode die auf der Kathodenoberfläche abgeschiedenen Kalkkristalle zum Abplatzen bringt. Die Kathode wird dadurch auf einfache Weise automatisch während des Betriebs von Kalkablagerungen befreit. Eine zur Abreinigung der Kathode ansonsten notwendige Umpolung der Elektroden ist somit überflüssig.

Besonders vorteilhaft ist es, wenn die Kalkschutzfunktion und Desinfektion der zu behandelnden Flüssigkeit durch ein erfindungsgemäßes Verfahren zur elektrolytischen Behandlung von Wasser beziehungsweise wässrigen Lösungen mittels einer Elektrolyseeinrichtung erfolgt, bei dem mindestens zwei Elektroden der Elektrolyseeinrichtung auf unterschiedliche elektrische Potentiale gelegt werden, wobei die Potentialdifferenz zwischen den Elektroden mindestens so groß gewählt wird, dass eine Elektrolyse des Wassers und/oder von im Wasser enthaltenen Chlorid-Ionen erfolgen kann, wobei die Elektroden mindestens eine Anode und eine Kathode umfassen. Die elektrolytische Behandlung des Wassers beziehungsweise der wässrigen Lösungen erfolgt dabei in zwei Bereichen der Elektrolyseeinrichtung mittels zweier unterschiedlicher Anodenbereiche, wobei ein erster Anodenbereich aus einem oxidationsstabilen Material und ein weiterer Anodenbereich zumindest teilweise aus einem Kohlenstoffmaterial gefertigt ist. Die elektrolytische Behandlung des Wasser beziehungsweise der wässrigen Lösungen erfolgt mittels mindestens zweier elektrisch voneinander isolierter Anoden, wobei mindestens eine der elektrisch voneinander isolierten Anoden den ersten Anodenbereich und mindestens eine andere der elektrisch voneinander isolierten Anoden den weiteren Anodenbereich umfasst.

Bei einer besonders bevorzugten Variante des erfindungsgemäßen Verfahrens fließt die zu behandelnde Flüssigkeit zuerst durch den Bereich der Elektrolyseeinrichtung, in dem sich der aus Kohlenstoffmaterial gefertigte weitere Anodenbereich befindet, und anschließend durch den Bereich der Elektrolyseeinrichtung, in dem sich der aus oxidationsstabilem Material gefertigte erste Anodenbereich befindet. Dadurch wird vermieden, dass elektrolytisch erzeugte Desinfizienzien am weiteren Anodenteil, der zumindest teilweise aus Kohlenstoffmaterial gefertigt ist, vorbeiströmen, dort adsorbiert werden oder chemisch abreagieren. Dies würde deren Konzentration erheblich reduzieren und die Wirkung der Desinfektion deutlich schwächen.

Bei einer weiteren Variante des erfindungsgemäßen Verfahrens fließt nur ein Teilstrom der zu behandelnden Flüssigkeit durch den Bereich der Elektrolyseeinrichtung, in dem sich der aus oxidationsstabilem Material gefertigte erste Anodenbereich befindet, wobei dieser Teilstrom dem Hauptstrom nach der Elektrolyseeinrichtung wieder zugemischt wird. Damit wird vermieden, dass die elektrolytisch erzeugten Desinfizienzien mit dem Kohlenstoffmaterial in Kontakt kommen. Außerdem ist die Verweilzeit des gedrosselten Teilstroms in der elektrolytischen Desinfektionseinrichtung auch bei hohen Gesamtdurchflüssen genügend lange, um eine ausreichende Menge an Desinfizienzien zu erzeugen.

Die voneinander isolierten Anoden können mit Hilfe einer elektronischen Steuerungseinrichtung separat angesteuert und hierdurch auf unterschiedlichen elektrischen Potentialen gehalten werden.

Darüber hinaus kann es vorteilhaft sein, die elektrisch voneinander isolierten Anoden zu unterschiedlichen Zeiten mit Strom zu beschicken.

Bei einer vorteilhaften Variante des erfindungsgemäßen Verfahrens wird die Konzentration des aus Chlorid-Ionen elektrolytisch erzeugten freien Chlors in der behandelten Flüssigkeit gemessen.

Eine Weiterbildung dieser Variante sieht vor, dass die Intensität der elektrolytischen Behandlung in Abhängigkeit von den gemessenen Werten der Konzentration von freiem Chlor gesteuert wird.

Um eine ausreichende Konzentration an Chlorid-Ionen in der zu behandelnden Lösung zu gewährleisten, kann vor der elektrolytischen Behandlung Chlorid, bevorzugt Natriumchlorid (Kochsalz), mittels einer Dosiereinrichtung in Fließrichtung zudosiert werden.

Darüber hinaus ist es von Vorteil, wenn die Kathode während des Betriebs von Kalkablagerungen befreit wird.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen schematischen Vertikalschnitt einer nicht erfindungsgemäßen Vorrichtung; und
- Fig. 2: einen schematischen Vertikalschnitt einer erfindungsgemäßen Vorrichtung mit zwei voneinander isolierten Anodenbereichen.

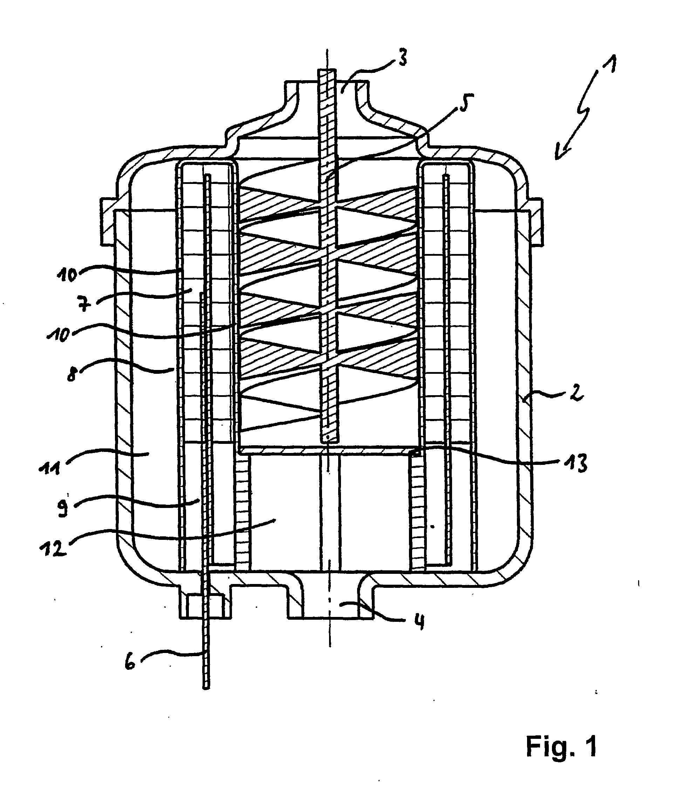

**Fig. 1** zeigt einen Ausschnitt einer auf elektrolytischer Basis arbeitende Wasseraufbereitungsanlage **1** mit einem Gehäuse **2,** welches einen Zulauf **3** für zu behandelndes Wasser sowie einen Auslass **4** für behandeltes Wasser aufweist. Im Inneren des Gehäuses befindet sich eine Elektrolyseeinrichtung mit einer bürstenförmige Kathode **5** und einer Anode, welche eine Stromzuführung **6** und einen Graphitfilz **7** umfasst. Als Stromzuführung 6 dient beispielsweise ein mit Edelmetall-Mischoxiden beschichtetes Titanstreckmetall oder ein platinierter Titandraht. Die Stromzuführung 6 ragt hier nur teilweise in den Graphitfilz 7 hinein, so dass zwei unterschiedliche Anodenbereiche **8, 9** gebildet werden. Ein erster Anodenbereich 9 ist nicht vom Graphitfilz 7 umgeben, während ein weiterer Anodenbereich 8 im Bereich des Graphitfilzes 7 liegt. Zum Anlegen einer für die Elektrolyse notwendigen Potentialdifferenz zwischen der Kathode 5 und der Anode mit den Anodenbereichen 8, 9 dient eine in der Abbildung nicht dargestellte Spannungsquelle mit elektronischer Steuerungseinrichtung.

Das zu behandelnde Wasser fließt zunächst durch den Zulauf 3 in die Elektrolyseeinrichtung, die sich innerhalb des Gehäuses 2 befindet. Das Wasser durchströmt zuerst die bürstenförmige Kathode 5 und fließt von dort zum Graphitfilz 7. Durch die im Bereich zwischen Kathode 5 und Graphitfilz 7 stattfindende Elektrolyse von - Wasser werden Kalziumkarbonat-Impfkristalle gebildet, die bei der Einstellung des Kalk-Kohlensäure-Gleichgewichtes ausfallenden Kalk an sich binden, so dass ein Verkalken von nachfolgenden Installationseinrichtungen weitgehend verhindert wird. Der Graphitfilz 7 ist mit Diaphragmen **10** fixiert, die gleichzeitig als Abstandshalter zwischen dem Graphitfilz 7 und der Kathode 5 dienen. Das Wasser fließt über einen Kanal **11** zum Anodenbereich 9. Hier findet eine elektrolytische Erzeugung von chlorhaltigen Desinfizienzien aus im Wasser enthaltenen Chlorid-Ionen statt. Das so behandelte Wasser durchströmt die Diaphragmen 10 und fließt über einen Kanal **12** in den Auslass 4. Eine wasserundurchlässige Trennwand **13** verhindert, dass das Wasser direkt aus dem Bereich um die Kathode 5 zum Auslass 4 fließt, ohne den ersten Anodenbereich 9 zu durchströmen.

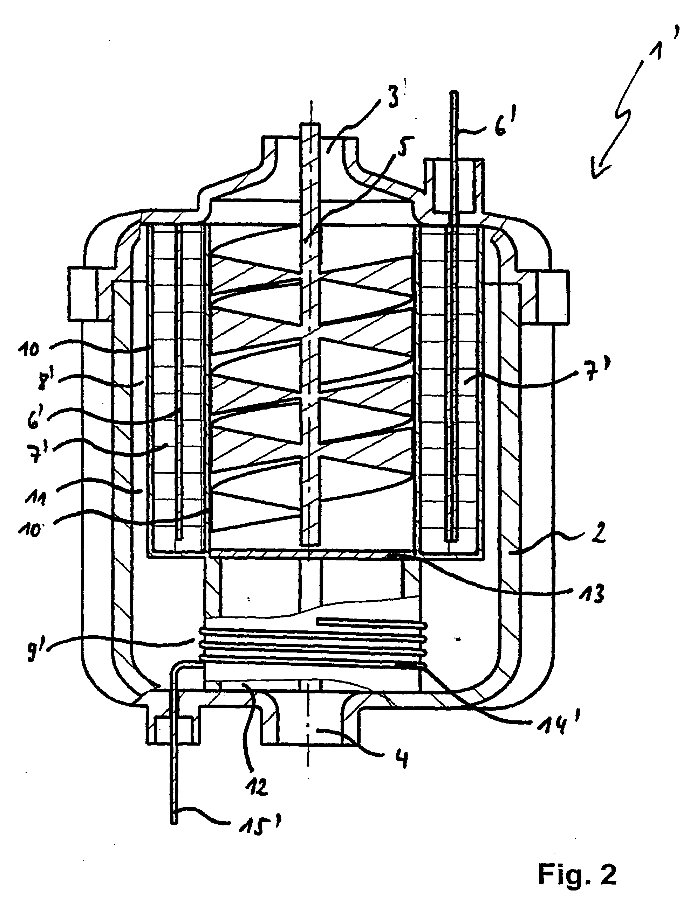

**Fig. 2** zeigt eine erfindungsgemäβe Ausführungsform einer Wasseraufbereitungsanlage **1'** mit zwei voneinander isolierten Anodenbereichen **8', 9'.** Der erste Anodenbereich 9' umfasst lediglich einen gewickelten platinierten Titandraht **14'** und eine Stromzuführung **15'.** Im weiteren Anodenbereich 8' ragt, im Gegensatz zu der in Fig. 1 gezeigten Ausführungsform, eine Stromzuleitung **6'** vollständig in einen Graphitfilz **7'** hinein.

Die Fließrichtung des Wassers in dieser Ausführungsform entspricht der in Fig. 1 beschriebenen Fließrichtung. So durchströmt auch hier das Wasser zuerst die bürstenförmige Kathode 5 und fließt von dort zum Graphitfilz 7', wobei die zur Härtestabilisierung beitragenden Kalziumkarbonat-Impfkristalle gebildet werden. Am ersten Anodenbereich 9' um den platinierten Titandraht 14', den das Wasser danach passiert, werden die chlorhaltigen Desinfizienzien aus im Wasser enthaltenen Chlorid-Ionen elektrolytisch erzeugt.

Vorteilhaft an dieser Ausführungsform ist, dass die beiden Anoden räumlich getrennt und elektrisch voneinander isoliert sind, so dass einerseits gebildete Desinfektionsmittel mit dem Graphitfilz 7' nicht in Kontakt kommen und mit diesem reagieren und andererseits beide Anoden mit einer in der Abbildung nicht dargestellten elektronischen Steuereinrichtung getrennt angesteuert werden können. Dies ist besonders vorteilhaft, weil die Desinfektion und die Verhinderung von unerwünschten Kalkausfällungen in der Regel unterschiedliche Behandlungszeiten und Intensitäten verlangen. Alternativ zum Graphitfilz 7' ist beispielsweise auch eine Schüttung aus Kohlenstoffpartikeln denkbar.

Insgesamt ergibt sich eine Vorrichtung beziehungsweise ein Verfahren, mit der beziehungsweise mit dem sowohl eine Desinfektion als auch eine Härtestabilisierung einer zu behandelnden Flüssigkeit kostengünstig und effizient erfolgen kann.

### Bezugszeichenliste

| | |
|---|---|
| 1, 1' | Wasseraufbereitungsanlage |
| 2 | Gehäuse |
| 3 | Zulauf |
| 4 | Auslass |
| 5 | Kathode |
| 6, 6' | Stromzuführung |
| 7, 7' | Graphitfilz |
| 8, 8' | weiterer Anodenbereich |
| 9, 9' | erster Anodenbereich |
| 10 | Diaphragma |
| 11 | Kanal |
| 12 | Kanal |
| 13 | Trennwand |
| 14' | platinierter Titandraht |
| 15' | Stromzuführung |

## Patentansprüche

1. Vorrichtung zur elektrolytischen Behandlung von Wasser bzw. wässrigen Lösungen mit einem Zulauf (3) für die zu behandelnde Flüssigkeit und einem Auslass (4) für die behandelte Flüssigkeit sowie mit einer Elektrolyseeinrichtung, die zwischen dem Zulauf (3) und dem Auslass (4) angeordnete Elektroden aufweist, welche auf gegeneinander unterschiedliche elektrische Potentiale gelegt werden können, wobei die Potentialdifferenz mindestens so groß gewählt ist, dass eine Elektrolyse von Wasser und/oder von im Wasser enthaltenen Chlorid-Ionen erfolgen kann, wobei die Elektroden mindestens eine Anode und eine Kathode (5) umfassen, und wobei ein erster Anodenbereich (9, 9'), der aus einem oxidationsstabilen Material gefertigt ist, und ein weiterer Anodenbereich (8, 8'), der zumindest teilweise aus einem Kohlenstoffmaterial gefertigt ist, vorgesehen ist
**dadurch gekennzeichnet,**
**dass** der erste (9, 9') und der weitere Anodenbereich (8, 8') elektrisch voneinander isoliert angeordnet sind.

2. Vorrichtung nach Anspruch 1 **dadurch gekennzeichnet, dass** das Kohlenstoffmaterial des weiteren Anodenbereichs (8, 8') Aktivkohle, Graphit, Kohlenstofffilz, Graphitfilz (7, 7') und/oder eine Schüttung aus Kohlenstoffpartikeln enthält.

3. Vorrichtung nach einem der Ansprüche 1 oder 2, **dadurch gekennzeichnet, dass** in das Kohlenstoffmaterial mindestens eine Stromzuführung (6, 6') hineinragt.

4. Vorrichtung nach Anspruch 3, **dadurch gekennzeichnet, dass** die Stromzuführung (6, 6') aus einem elektrisch leitendem Material, vorzugsweise aus Graphit, Edelmetall oder mit Edelmetall oder Mischoxiden beschichtetem Titan, gefertigt ist.

5. Vorrichtung nach einem der vorhergehenden Ansprüche, **dadurch gekennzeichnet, dass** das oxidationsstabile Material des ersten Anodenbereichs (9, 9') Edelmetall oder mit Edelmetall oder Mischoxiden beschichtetes Titan enthält.

6. Vorrichtung nach einem der vorhergehenden Ansprüche, **dadurch gekennzeichnet, dass** eine elektronische Steuereinrichtung zur Ansteuerung der Elektroden vorgesehen ist.

7. Vorrichtung nach einem der vorhergehenden Ansprüche, **dadurch gekennzeichnet, dass** eine Messzelle zur Ermittlung des Gehalts an freiem Chlor in der behandelten Flüssigkeit vorgesehen ist.

8. Vorrichtung nach einem der vorhergehenden Ansprüche, **dadurch gekennzeichnet, dass** eine Dosiereinrichtung zur Regelung des Chloridgehaltes vorgesehen ist.

9. Vorrichtung nach einem der vorhergehenden Ansprüche, **dadurch gekennzeichnet, dass** die Kathode (5) bürstenförmig, insbesondere mit sternförmig radial abstehenden Borsten, ausgebildet ist.

10. Vorrichtung nach einem der vorhergehenden Ansprüche, **dadurch gekennzeichnet, dass** Mittel zur Befreiung der Kathode (5) von Kalkablagerungen während des Betriebs der Vorrichtung vorgesehen sind.

11. Verfahren zur elektrolytischen Behandlung von Wasser beziehungsweise wässrigen Lösungen mittels einer Elektrolyseeinrichtung, bei dem mindestens zwei Elektroden der Elektrolyseeinrichtung auf unterschiedliche elektrische Potentiale gelegt werden, wobei die Potentialdifferenz zwischen den Elektroden mindestens so groß gewählt wird, dass eine Elektrolyse des Wassers und/oder von im Wasser enthaltenen Chlorid-Ionen erfolgen kann, wobei die Elektroden mindestens eine Anode und eine Kathode (5) umfassen, wobei die elektrolytische Behandlung des Wassers beziehungsweise der wässrigen Lösungen in zwei Bereichen der Elektrolyseeinrichtung mittels zweier unterschiedlicher Anodenbereiche (8, 8', 9, 9') erfolgt, wobei ein erster Anodenbereich (9, 9') aus einem oxidationsstabilen Material und ein weiterer Anodenbereich (8, 8') zumindest teilweise aus einem Kohlenstoffmaterial gefertigt ist,
**dadurch gekennzeichnet,**
**dass** die elektrolytische Behandlung des Wasser beziehungsweise der wässrigen Lösungen mittels mindestens zweier elektrisch voneinander isolierter Anoden erfolgt, wobei mindestens eine der elektrisch voneinander isolierten Anoden den ersten Anodenbereich (9, 9') und mindestens eine andere der elektrisch voneinander isolierten Anoden den weiteren Anodenbereich (8, 8') umfasst.

12. Verfahren nach Anspruch 11, **dadurch gekennzeichnet, dass** die zu behandelnde Flüssigkeit zuerst durch den Bereich der Elektrolyseeinrichtung fließt, in welchem sich der aus Kohlenstoffmaterial gefertigte weitere Anodenbereich (8, 8') befindet, und anschließend durch den Bereich der Elektrolyseeinrichtung fließt, in dem sich der aus oxidationsstabilem Material gefertigte erste Anodenbereich (9, 9') befindet.

13. Verfahren nach einem der Ansprüche, 11 oder 12 **dadurch gekennzeichnet, dass** nur ein Teilstrom der zu behandelnden Flüssigkeit durch den Bereich der Elektrolyseeinrichtung fließt, in dem sich der aus oxidationsstabilem Material gefertigte erste Anodenbereich (9, 9') befindet, wobei dieser Teilstrom dem Hauptstrom nach der Elektrolyseeinrichtung wieder zugemischt wird.

14. Verfahren nach einem der Ansprüche 11 bis 13, **dadurch gekennzeichnet, dass** die elektrisch voneinander isolierten Anoden mittels einer elektronischen Steuerungseinrichtung separat angesteuert werden.

15. Verfahren nach Anspruch 14, **dadurch gekennzeichnet, dass** die elektrisch voneinander isolierten Anoden auf unterschiedlichen elektrischen Potentialen gehalten werden.

16. Verfahren nach Anspruch 14 oder 15, **dadurch gekennzeichnet, dass** die elektrisch voneinander isolierten Anoden zu unterschiedlichen Zeiten mit Strom beschickt werden.

17. Verfahren nach einem der Ansprüche 11 bis 16, **dadurch gekennzeichnet, dass** die Konzentration des aus Chlorid-Ionen elektrolytisch erzeugten freien Chlors in der behandelten Flüssigkeit gemessen wird.

18. Verfahren nach Anspruch 17, **dadurch gekennzeichnet, dass** die Intensität der elektrolytischen Behandlung in Abhängigkeit von den gemessenen Werten der Konzentration von freiem Chlor gesteuert wird.

19. Verfahren nach Anspruch 17 oder 18, **dadurch gekennzeichnet, dass** vor der elektrolytischen Behandlung Chlorid, bevorzugt Natriumchlorid (Kochsalz), mittels einer Dosiereinrichtung in Fließrichtung zudosiert wird.

20. Verfahren nach einem der Ansprüche 11 bis 19, **dadurch gekennzeichnet, dass** die Kathode (5) während des Betriebs von Kalkablagerungen befreit wird.

## Claims

1. Device for the electrolytic treatment of water or aqueous solutions, comprising an inlet (3) for the liquid to be treated, and an outlet (4) for the treated liquid, as well as an electrolysis unit comprising electrodes which are arranged between the inlet (3) and the outlet (4) and can be connected to mutually different electric potentials, wherein the potential difference is selected to be at least high enough that electrolysis of water and/or of chloride ions present in the water can be performed, wherein the electrodes comprise at least one anode and one cathode (5), and wherein a first anode area (9, 9'), which is produced from an oxidation-resistant material, and a further anode area (8, 8'), which is produced at least in part from a carbon material, are provided,
**characterized in that**
the first (9, 9') and the further anode area (8, 8') are arranged so that they are electrically insulated from each other.

2. Device according to claim 1, **characterized in that** the carbon material of the further anode area (8, 8') contains activated carbon, graphite, carbon felt, graphite felt (7, 7') and/or a bulk of carbon particles.

3. Device according to any one of the claims 1 or 2, **characterized in that** at least one current supply (6, 6') projects into the carbon material.

4. Device according to claim 3, **characterized in that** the current supply (6, 6'), is produced from an electrically conducting material, preferably from graphite, noble metal, or titanium that is coated with noble metal or with mixed oxides.

5. Device according to any one of the preceding claims, **characterized in that** the oxidation-resistant material of the first anode area (9, 9') contains noble metal or titanium that is coated with noble metal or with mixed oxides.

6. Device according to any one of the preceding claims, **characterized in that** an electronic control device is provided for controlling the electrodes.

7. Device according to any one of the preceding claims, **characterized in that** a measuring cell is provided for detecting the content of free chlorine in the treated liquid.

8. Device according to any one of the preceding claims, **characterized in that** a metering device is provided for controlling the chloride content.

9. Device according to any one of the preceding claims, **characterized in that** the cathode (5) has a brush-shaped design, in particular, having bristles which radially project in a star shape.

10. Device according to any one of the preceding claims, **characterized in that** means are provided for freeing the cathode (5) from lime deposits during operation of the device.

11. Method for electrolytic treatment of water or aqueous solutions using an electrolysis unit, in which at least two electrodes of the electrolysis device are connected to different electric potentials, wherein the potential difference between the electrodes is selected to be at least high enough that an electrolysis of water and/or of chloride ions present in the water can be performed, wherein the electrodes comprise at least one anode and one cathode (5), wherein the electrolytic treatment of the water or of the aqueous solutions is performed in two areas of the electrolysis unit by means of two different anode areas (8, 8', 9, 9'), wherein a first anode area (9, 9') is produced from an oxidation-resistant material and a further anode area (8, 8') is produced at least in part from a carbon material,
**characterized in that**
the electrolytic treatment of water or of the aqueous solutions is performed by means of at least two anodes that are electrically insulated from each other, wherein at least one of the electrically insulated anodes comprises the first anode area (9, 9') and at least one other of the electrically insulated anodes comprises the further anode area (8, 8').

12. Method according to claim 11, **characterized in that** the liquid to be treated initially flows through the area of the electrolysis unit, in which the further anode area (8, 8') produced form carbon material is located, and subsequently flows through the area of the electrolysis unit, in which the first anode area (9, 9') produced from oxidation-resistant material is located.

13. Method according to any one of the claims 11 or 12, **characterized in that** only a partial flow of the liquid to be treated flows through the area of the electrolysis unit, in which the first anode area (9, 9') produced from oxidation-resistant material is located, wherein this partial flow is added again to the main flow downstream of the electrolysis unit.

14. Method according to any one of the claims 11 through 13, **characterized in that** the electrically insulated anodes are controlled separately by means of an electronic control device.

15. Method according to claim 14, **characterized in that** the electrically insulated anodes are kept at different electric potentials.

16. Method according to claim 14 or 15, **characterized in that** the electrically insulated anodes are supplied with current at different times.

17. Method according to any one of the claims 11 through 16, **characterized in that** the concentration of the free chlorine, which was electrolytically produced from chloride ions, in the treated liquid is measured.

18. Method according to claim 17, **characterized in that** the intensity of the electrolytic treatment is controlled in dependence on the measured values of the concentration of free chlorine.

19. Method according to claim 17 or 18, **characterized in that** chloride, preferably sodium chloride (common salt), is added in the flow direction by means of a metering device prior to electrolytic treatment.

20. Method according to any one of the claims 11 through 19, **characterized in that** the cathode (5) is freed from lime deposits during operation.

## Revendications

1. Dispositif de traitement électrolytique de l'eau ou de solutions aqueuses comportant une entrée (3) pour le liquide à traiter et une sortie (4) pour le liquide traité ainsi qu'un dispositif d'électrolyse qui présente des électrodes disposées entre l'entrée (3) et la sortie (4), lesquelles peuvent être portées à des potentiels électriques différents l'un de l'autre, la différence de potentiel étant choisie au moins assez grande pour qu'une électrolyse de l'eau et/ou d'ions chlorure contenus dans l'eau puisse avoir lieu, les électrodes comprenant au moins une anode et une cathode (5), et une première zone d'anode (9, 9'), qui est réalisée dans un matériau stable à l'oxydation, et une autre zone d'anode (8, 8'), qui est réalisée au moins partiellement dans un matériau carboné, étant prévues,
**caractérisé en ce**
**que** la première (9, 9') et l'autre zone d'anode (8, 8') sont isolées électriquement l'une de l'autre.

2. Dispositif selon la revendication 1, **caractérisé en ce que** le matériau carboné de l'autre zone d'anode (8, 8') contient du charbon actif, du graphite, du feutre de carbone, du feutre de graphite (7, 7') et/ou un lit de particules de carbone.

3. Dispositif selon une des revendications 1 ou 2, **caractérisé en ce qu'**au moins une amenée de courant (6, 6') pénètre dans le matériau carboné.

4. Dispositif selon la revendication 3, **caractérisé en ce que** l'amenée de courant (6, 6') est de préférence réalisée dans un métal électriquement conducteur, de préférence en graphite, métal précieux ou titane revêtu de métal précieux ou d'oxydes mixtes.

5. Dispositif selon une des revendications précédentes, **caractérisé en ce que** le matériau stable à l'oxydation de la première zone d'anode (9, 9') contient un métal précieux ou du titane revêtu de métal précieux ou d'oxydes mixtes.

6. Dispositif selon une des revendications précédentes, **caractérisé en ce qu'**un dispositif de commande électronique est prévu pour commander les électrodes.

7. Dispositif selon une des revendications précédentes, **caractérisé en ce qu'**un capteur est prévu pour déterminer la teneur en chlore libre du liquide traité.

8. Dispositif selon une des revendications précédentes, **caractérisé en ce qu'**un dispositif de dosage pour réguler la teneur en chlorure est prévu.

9. Dispositif selon une des revendications précédentes, **caractérisé en ce que** la cathode (5) est réalisée en forme de brosse, en particulier avec des soies dressées radialement en étoile.

10. Dispositif selon une des revendications précédentes, **caractérisé en ce que** des moyens sont prévus pour débarrasser la cathode (5) des dépôts de calcaire pendant le fonctionnement du dispositif.

11. Procédé de traitement électrolytique de l'eau ou de solutions aqueuses au moyen d'un dispositif d'électrolyse dans lequel au moins deux électrodes du dispositif d'électrolyse sont portées à des potentiels électriques différents, la différence de potentiel entre les électrodes étant choisie au moins assez grande pour qu'une électrolyse de l'eau et/ou d'ions chlorure contenus dans l'eau puisse avoir lieu, les électrodes comprenant au moins une anode et une cathode (5), le traitement électrolytique de l'eau ou des solutions aqueuses s'effectuant dans deux zones du dispositif d'électrolyse au moyen de deux zones d'anode différentes (8, 8', 9, 9'), une première zone d'anode (9, 9') étant réalisée dans un matériau stable à l'oxydation et une autre zone d'anode (8, 8') au moins partiellement dans un matériau carboné,
**caractérisé en ce**
**que** le traitement électrolytique de l'eau ou des solutions aqueuses s'effectue au moyen d'au moins deux anodes isolées électriquement l'une de l'autre, au moins une des anodes isolées électriquement l'une de l'autre comprenant la première zone d'anode (9, 9') et au moins une autre des anodes isolées électriquement l'une de l'autre l'autre zone d'anode (8, 8').

12. Procédé selon la revendication 11, **caractérisé en ce que** le liquide à traiter passe d'abord à travers la zone du dispositif d'électrolyse dans laquelle se trouve l'autre zone d'anode (8, 8') réalisée en matériau carboné, et ensuite à travers la zone du dispositif d'électrolyse dans laquelle se trouve la première zone d'anode (9, 9') réalisée dans un matériau stable à l'oxydation.

13. Procédé selon une des revendications 11 ou 12, **caractérisé en ce que** seul un flux partiel du liquide à traiter passe à travers la zone du dispositif d'électrolyse dans laquelle se trouve la première zone d'anode (9, 9') réalisée dans un matériau stable à l'oxydation, ce flux partiel étant de nouveau mélangé au flux principal après le dispositif d'électrolyse.

14. Procédé selon une des revendications 11 à 13, **caractérisé en ce que** les anodes isolées électriquement l'une de l'autre sont commandées séparément au moyen d'un dispositif de commande électronique.

15. Procédé selon la revendication 14, **caractérisé en ce que** les anodes isolées électriquement l'une de l'autre sont maintenues à des potentiels électriques différents.

16. Procédé selon la revendication 14 ou 15, **caractérisé en ce que** les anodes isolées électriquement l'une de l'autre sont alimentées en courant à des instants différents.

17. Procédé selon une des revendications 11 à 16, **caractérisé en ce que** la concentration du chlore libre produit par électrolyse à partir d'ions chlorure est mesurée dans le liquide traité.

18. Procédé selon la revendication 17, **caractérisé en ce que** l'intensité du traitement électrolytique est commandée en fonction des valeurs mesurées de la concentration de chlore libre.

19. Procédé selon la revendication 17 ou 18, **caractérisé en ce qu'**avant le traitement électrolytique, du chlorure, de préférence du chlorure de sodium (sel de cuisine) est ajouté dans la direction d'écoulement au moyen d'un dispositif de dosage.

20. Procédé selon une des revendications 11 à 19, **caractérisé en ce que** la cathode (5) est débarrassée des dépôts de calcaire pendant le fonctionnement.
